Europäisches Patentamt

(19) European Patent Office

Office européen des brevets

(11) Publication number:

**0 071 435**
**B1**

(12) **EUROPEAN PATENT SPECIFICATION**

(45) Date of publication of patent specification: **30.10.85**

(21) Application number: **82303912.8**

(22) Date of filing: **23.07.82**

(51) Int. Cl.⁴: **H 01 B 7/26, H 01 B 9/02**

(54) **Electric cable and electric cable installations.**

(30) Priority: **28.07.81 GB 8123214**

(43) Date of publication of application:
**09.02.83 Bulletin 83/06**

(45) Publication of the grant of the patent:
**30.10.85 Bulletin 85/44**

(84) Designated Contracting States:
**AT BE DE FR GB IT NL SE**

(56) References cited:
**DE-A-2 443 973**
**FR-A-1 340 870**
**GB-A-1 255 181**

**REVUE GENERALE DE L'ELECTRICITE, vol. 74,**
**no. 6, June 1965, pages 481-498, Paris, FR. M.**
**FALLOU: "Analyse des procédés permettant de**
**supprimer les pertes dans les gaines**
**métalliques de câbles unipolaires à courant**
**alternatif"**

(73) Proprietor: **PIRELLI GENERAL plc**
**40 Chancery Lane**
**London WC2A 1JH (GB)**

(72) Inventor: **Ball, Edmund Hugh**
**7 Bassett Wood Drive**
**Southampton Hampshire (GB)**

(74) Representative: **Spencer, Graham Easdale et al**
**A.A. Thornton & CO Northumberland House**
**303-306, High Holborn**
**London WC1V 7LE (GB)**

Courier Press, Leamington Spa, England.

## Description

This invention concerns improvements relating to electric power cables and power cable installations and more particularly with high voltage power cables and installations thereof, for example adapted for use at 132 kV or 400 kV.

As is well known (see for example the text book "Power Cables — Their Design and Installation" by C. C. Barnes, Second Edition, published by Chapman & Hall Ltd. in 1966) single-core power cables are to be preferred to three-core cables for such high voltages as 132 kV and must be used for voltages of the order of 200 kV and above owing to the impracticability of manufacturing three-core power cables adapted to such high voltages. The present invention is concerned with single-core power cables and their installation and not with three-core cables.

It has for some time been standard practice in the UK at least when using single-core cables to form a single-phase or three-phase transmission system to bond and earth the metal sheaths of such cables at more than one point, usually at opposite ends of a cable run, for the purpose of short-circuiting the induced sheath voltages which otherwise would appear as the result of transformer action between the cable conductor and its sheath. When the cable sheaths are thus bonded and earthed, the induced voltages are short-circuited but a current flows in the sheath dissipating energy as heat, and in order to eliminate or at least considerably reduce this effect it has also been standard practice to adopt a so-called cross-bonding technique where three-phase groups of single-core cables are employed. The cross-bonding technique (see the book by C. C. Barnes abovementioned at pages 238 et seq) provides for breaks in the sheath metallic continuity between adjoining cable sections of equal length, solid bonding and earthing of the cable sheaths at the end of every third cable section, and transpositioning of the intermediate cable sections with cross-connections between the sheaths of the intermediate cable sections to enable the vector sum of the induced voltages to be zero for every three cable sections.

For avoiding heat losses arising from circulating sheath currents in single-core cables it has thus been the practice either to adopt a single-point-bonding or a cross-bonding technique. These methods of special bonding involve the use of sheath sectionalising insulators which enable discrete lengths of sheath, usually single cable lengths, to be cross-connected as necessary so as to cancel the induced sheath emf. Whilst these techniques are quite acceptable and effective when the cable installation is carrying 50 Hz three-phase currents and do not introduce significant problems during 50 Hz fault currents, they do introduce problems during transients occurring for example due to switching operation or lightning strikes. A transient voltage in the coaxial mode propagating along the cable sheath will, on arrival at a sheath sectionalizing insulator, give rise to a very large sheath voltage which may damage the sheath insulation. To avoid this problem it is normal practice in high voltage cable installations to use sheath voltage limiters at special bonding points. The sheath voltage limiter is usually constituted by a non-linear voltage-dependent resistor or lightning arrester. The inclusion of such sheath voltage limiters in special-bonded single-core power cable installations considerably adds to the cost and complexity of the installation.

The present invention relates to an electrical power cable installation comprising a single-core electrical power cable, having a central conductor core and an outer sheath electrically insulated from the core, as exemplified by FR—A—1340870.

The electrical power cable and installation is characterised in that the cable has an inner shield disposed between and insulated from the central core conductor and the outer sheath, the inner shield being continuous throughout the length of the cable run of the installation and connected to earth at each end of said run so as to provide a continuous path for surges developed in the cable, for example by lightning strikes or switching operations and thereby prevent the appearance of corresponding high transient over voltages on the cable sheath, and particularly at any discontinuities therein, the electrical resistance of said shield being high relative to said outer sheath and the insulation between the cable shield and the cable sheath being sufficient to sustain said surges but such as to fail on internal cable faults.

Another object of the invention is an electrical power cable installation comprising three coextensive such installations as described above, one for each phase, caracterised in that at spaced locations throughout the cable run the outer sheaths of all three cables are longitudinally discontinuous and an earth connection is made to the inner shields of all three cables, each cable section extending between such locations having its outer sheath connected to earth at one or more points.

Still another object of the invention is a single-core electrical power cable for use in an electrical power cable installation as described above and comprising a central conductor core and an outer sheath electrically insulated from the core conductor, characterised by an inner shield disposed between and electrically insulated from the central core and the outer sheath, said inner shield being adapted and arranged to be connected to earth at each end of the cable so as in use of the cable to serve as a continuous path throughout the length of the cable, for example for surges developed in the cable by lightning strikes or switching operations for example thereby to prevent the appearance of corresponding high transient overvoltages on the outer cable sheath and particularly at discontinuities therein, the electrical resistance of said inner shield being high relative to said outer sheath and the insulation between the inner cable shield and outer cable sheath being sufficient to sustain said surges but such as to fail on internal cable faults.

The present invention thus proposes a special form of single-core power cable adapted for special bonding without need for surge voltage limiters. The invention resides in the concept of providing in a single-core power cable an additional inner sheath (herein referred to as a shield for avoidance of confusion with the outer cable sheath) insulated from the cable sheath proper and intended to be maintained continuous throughout the cable run with the cable sheath proper being specially bonded so that the advantages of a specially bonded installation are retained, the resistance of the inner shield being relatively high: significant heat losses (such as conventionally arise in single-core cable sheaths which are not specially bonded and which are a function of the resistance of the sheath) are therefore avoided. By forming the inner shield to have a relatively high resistance, to avoid significant heat losses, and forming the cable sheath proper so as to fulfill its normal functions, namely of providing a path for earth fault currents and a moisture impermeable and hydraulic barrier, cable installations employing special bonding of the cable sheath proper but maintaining the inner shield continuous are not susceptible to the very high surge overvoltages arising with conventional cable installations; this is because in an installation according to the invention the travelling wave associated with a switching surge or lightning strike has an uninterrupted path along the inner shield and so suffers no reflection or refraction effects such as give rise to the very high voltages conventionally encountered with conventional installations. The invention thus enables surge voltage limiters to be dispensed with.

The power cable according to the invention can for example be of conventional construction other than in respect of the provision of the inner resistive shield. In a typical 400 kV oil filled cable design for example, an inner shield resistance of the order of 0.02 ohms/metre would avoid significant heat loss and this might be obtained for example by use of a helically-applied metallic tape or by use of helically-applied fine copper or aluminium wires preferably sandwiched between layers of metallised paper. A layer of insulating paper for example of the order of 1.5 mm to 2.0 mm in thickness might then be applied over this inner shield, followed by a metallised paper and copper woven tape layer for example and the usual lead or aluminium sheath.

As mentioned above, the inner cable shield is electrically insulated from the outer sheath and such insulation is preferably capable of withstanding voltages arising in the following operating conditions:—

(i) Under 50 Hz balanced load, the inner shield at earth potential and the outer sheath at a voltage of up to the order of 100 volts;

(ii) under 50 Hz short circuit conditions, the inner shield at earth potential and the outer sheath at a voltage rising typically to of the order of 4 kV; and

(iii) under switching or lightning surges, the outer sheath at or near earth potential, and the inner shield rising in potential between earthed points to a level perhaps of the order of 100 kV depending upon the shield resistance, the spacing apart of earth points and the magnitude of the incoming surge.

The insulation level must be chosen to suit condition (iii) above but must be such as to be easily punctured in the event of a cable fault so that earth fault current can be transferred to the outer sheath sufficiently rapidly that damage to the inner shield over a substantial length of the cable can be avoided.

Since the outer sheath is screened by the inner shield from the effects of transient voltages, cross-connections between different sheath sections of a cross-bonded system can be made without particular regard to minimising inductance by the use of concentric bonding leads and no sheath voltage limiters are necessary. To economise on overall system requirements as compared with a conventional cross-bonded system it would be practicable in a cross-bonded cable installation according to the present invention to employ link boxes only at every third bay of the system and to make below ground the outer sheath cross connections at intermediate joints. In this way the insulation of the outer sheath to ground could be checked at every third joint bay. The inner shield would be earthed also at the same link box. Such a system would display attractions of economy, especially for long cable runs, by obviating the need for sheath voltage limiters and reducing the number of joint boxes, and has further significant advantages as regards its simplicity and reduced maintenance requirements as compared with conventional installations.

The invention, together with features and advantages thereof, will best become apparent from consideration of the following detailed description in conjunction with the accompanying drawings wherein:—

Figure 1 is a schematic showing of a conventional cross-bonded, three-phase, single-core power cable installation;

Figure 2 shows a single point earthed cable installation according to the invention employing cables constructed in accordance with the invention;

Figure 3 shows a cross-bonded cable installation according to the invention employing cables constructed in accordance with the invention; and

Figure 4 shows schematically the construction of a single-core power cable constructed in accordance with the present invention.

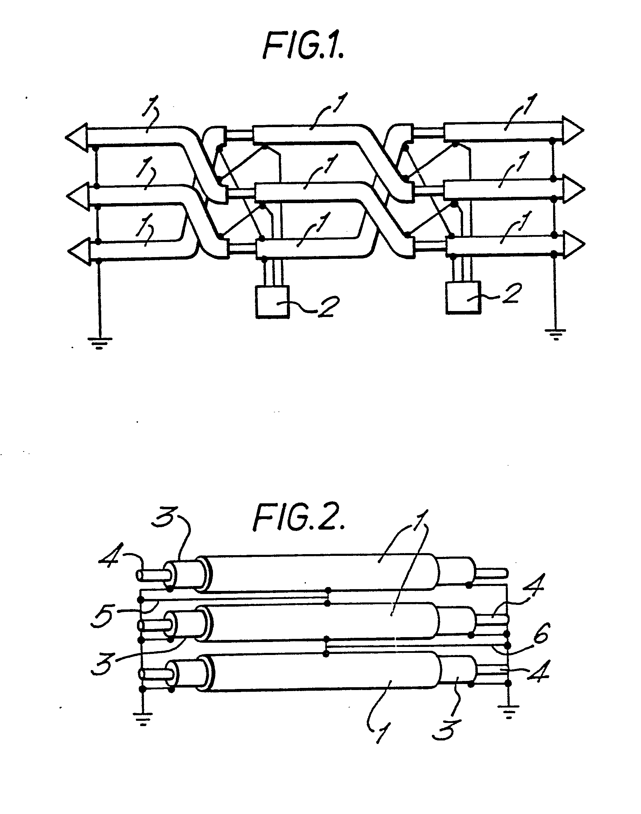

Referring first to Figure 1, shown therein is a typical conventional cross-bonded system in which the cables are laid flat and transposed at each joint between adjoining cable sections. As schematically represented, the outer cable sheaths 1 are solidly bonded and earthed after each third cable section, and at each intermediate cross-bonding position there are surge voltage limiters 2 which, as described hereinbefore, serve to protect the sheath insulation under transient conditions. When the cables are cross-bonded as shown, the resulting sheath discontinuities cause reflection and refraction of the travelling wave set up by a voltage surface, and subsequent reflections and refractions of the initial travelling wave cause large voltages to be seen across the sheath sectionalizing insulators (not shown in Figure 1) and between earth and the cable sheaths, and it is these large voltages which necessitate the use of surge voltage limiters commonly in the form of voltage-dependent non-linear resistors coupling the sheaths to earth.

The invention resides in the realisation that by providing the cable with an inner shield insulated from the main cable sheath proper and continuous throughout the length of the cable system, the travelling wave accompanying a lightning strike or switching surface has an uninterrupted path of travel and suffers no reflection or refraction. This eradicates or at least substantially reduces the effects of surge overvoltages and removes the need for surge voltage limiters thereby providing a less expensive and less complicated system requiring less involvement in its installation and reduced maintenance.

Referring to Figure 2, shown therein is a single-point earthed installation according to the invention. The drawing shows a three-phase installation, but a single phase installation could be similarly configured. As shown, each cable comprises an outer sheath 1, an inner shield 3 insulated from the outer sheath 1, and a central conductor 4 insulated from the inner shield 3. Other components of the cable construction are not shown in Figure 2. As shown the outer cable sheath 1 of each of the three phases is earthed at a single (central) point of the depicted cable run, and the inner shield 3 of each cable is earthed at each end thereof and is continuous therebetween. The arrangement of the single point earthing of the outer sheaths 1 shown in the Figure provides an effective earth continuity conductor 5, 6 for carrying through fault currents. The cable sheaths 1 could alternatively be earthed all at one point (end) of the cable run, and a separate earth continuity conductor provided extending from the earth connection at one end of the inner shield 3 to the earth connection at the other end.

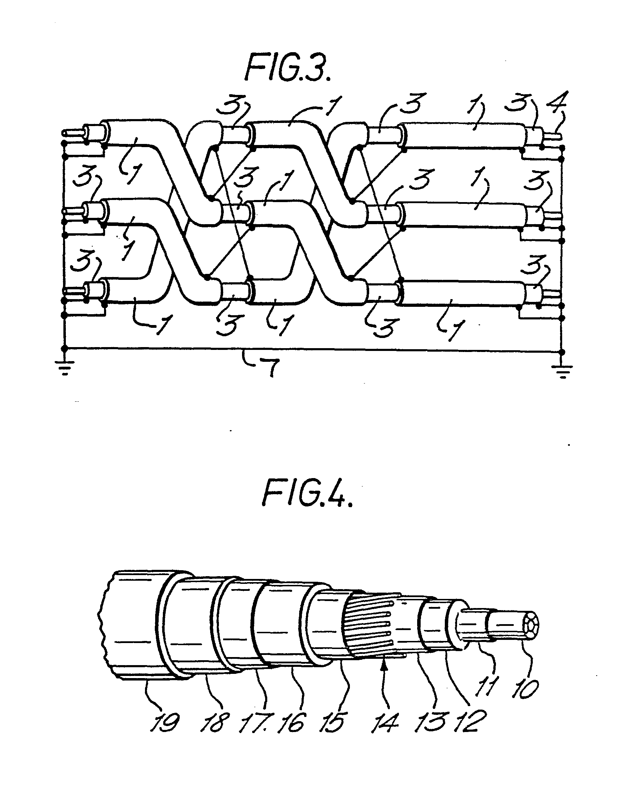

Figure 3 shows a cross-bonded installation according to the invention; the same reference numerals are used in Figure 3 as were used in Figure 2 for the same parts. As shown, the outer cable sheath sections 1 are solidly bonded and earthed at the end of each third cable section with the intermediate cable sections transposed as shown and cross-bonded. The inner cable shields 3 are continuous throughout each cable length and are earthed at each end of the run as shown. An earth continuity conductor 7 may if desired be provided between the two ends of the cable run though this is not strictly necessary.

Figure 4 shows an exemplary form of power cable constructed in accordance with the present invention. As shown, the cable comprises a central conductor 10, which may be ducted for the passage therethrough of oil, a conductive screen 11 enveloping the conductor 10 and formed for example of carbon black paper, a wrapping of paper insulation 12, a further screen of carbon impregnated paper 13, an inner shield 14 according to the present invention comprised of spaced apart fine copper wires helically wound with a relatively long layer so as to provide a resistance as described earlier herein, a further layer of carbon impregnated paper 15 wound over the inner shield 14, a paper insulation layer 16, a metallized paper screen 17, the outer metallic sheath 18 of the cable, and finally as appropriate one or more outer protective layers 19.

The choice of electrical resistance for the inner shield 14 is critical to the concept of the present invention and is a compromise selection between a requirement that it be high enough to cause only a small system derating and it be low enough to carry the normal capacitive current and surge currents without significant voltage drop. Likewise the level of insulation provided between the inner shield and the outer sheath is critical; it must be capable of sustaining normal load conditions, lighning and switching surges and short circuit conditions, but should fail on internal cable faults. A badly designed system subject to an internal fault condition could cause the continuous shield to be irreparably damaged throughout the entire cable length if the insulation did not fail locally to the fault which would considerably increase the cost of repairs to the system following a cable fault.

As an alternative to constructing the inner shield 14 of the cable shown in Figure 4 from fine wires wound helically about the cable, the inner shield could be comprised of lapped metal foil or other conductive tape which might be perforated to facilitate the drying and impregnation stages conventionally employed in the manufacture of such a cable. Furthermore, the insulating layer 16 could alternatively be semiconducting, for example in the form of paper loaded with carbon or with a material such as silicon carbide to provide a non-linear resistivity characteristic; by virtue of such an alternative construction, the cable would tend to exhibit enhanced surge energy absorption with consequent reduction in surge voltages.

Whilst in the foregoing the invention has been described and explained by reference to power cables of the oil filled type, it is to be appreciated that the invention is not limited to installations employing oil filled power cables and could be realized with so-called elastomeric cables wherein the cable insulation consists primarily of elastomeric material. One such elastomeric cable construction might for example comprise a central conductor core onto which there is extruded in a single operation a first layer of semiconducting elastomer constituting a conductor (core) screen, a second layer of cross-linked polyethylene for example constituting the insulation proper and a third layer of semiconducting elastomer, the inner shield of the invention then being constituted by fine wires wound helically on the extruded elastomer of the cable or by corresponding lapped metal foil or other conductive tapes providing the required electrical resistance, a layer of insulation then being provided over the thus-constituted shield, and the outer sheath of the cable being constituted for example by copper wires wrapped helically about the cable and covered with a protective extruded insulation layer. In an alternative construction, the polymeric insulation layer provided over the inner shield could be semiconducting as above described in connection with the oil filled type of cable.

There has thus been described an improved power cable and improved power cable installations in accordance with the present invention which promise a reduction in the cost and complexity of specially bonded power cable installations and in the level of maintenance required.

**Claims**

1. An electrical power cable installation comprising a single-core electrical power cable having a central conductor core (4, 10) and an outer sheath (1, 18) electrically insulated from the core (4, 10), characterised in that the cable has an inner shield (3, 14) disposed between and insulated from the central core conductor (10) and the outer sheath (1, 18), the inner shield (3, 14) being continuous throughout the length of the cable run of the installation and connected to earth at each end of said run so as to provide a continuous path for surges developed in the cable, for example by lightning strikes or switching operations and thereby prevent the appearance of corresponding high transient overvoltages, on the cable outer sheath (1, 18), and particularly at any discontinuities therein, the electrical resistance of said inner shield (3, 14) being high relative to said outer sheath (1, 18) and the insulation between the inner cable shield (3, 14) and outer cable sheath (1, 18) being sufficient to sustain said surges but such as to fail on internal cable faults.

2. An electrical power cable installation as claimed in claim 1, characterised in that the cable run of the installation comprises a plurality of serially connected cable sections and wherein the outer cable sheath (1, 18) of each section is electrically insulated from the outer cable sheaths (1, 18) of the adjoining sections and is connected to earth, and the inner cable shield (3, 14) of each section is coupled to the inner cable shields (3, 14) of the adjoining sections and is connected to earth at each end of the respective section.

3. An electrical power cable installation according to claim 2, characterised in that an earth continuity conductor extends alongside the cable and is earthed to the earthed points of the cable.

4. An electrical power cable installation comprising three coextensive such installations as claimed in claim 1, one for each phase, characterised in that at spaced locations throughout the cable run the outer sheaths (1, 18) of all three cables are longitudinally discontinuous and an earth connection is made to the inner shields (3, 14) of all three cables, each cable section extending between such locations having its outer sheath (1, 18) connected to earth at one or more points.

5. An electrical power cable installation comprising three coextensive such installations as claimed in claim 1, one for each phase, characterised in that the cable run throughout the installation is divided into sections each comprised of three lengths of the three cables, each of said cable lengths having the outer cable sheath (1, 18) longitudinally discontinuous at each end thereof, the outer cable sheath (1, 18) ends of the inner cable shields (3, 14) at each end of each said section being coupled to earth, and the oute cable sheath (1, 18) ends at the two locations intermediate the ends of each section being cross-bonded with transpositioning of the respective cable lengths for each phase at such intermediate locations.

6. A single-core electrical power cable for use in an electrical power cable installation as claimed in any of the preceding claims and comprising a central conductor core (4, 10) and an outer sheath (1, 18) electrically insulated from the core (4, 10), characterised by an inner shield (3, 14) disposed between and electrically insulated from the central core conductor (10) and the outer sheath (1, 18), said inner shield (3, 14) being adapted and arranged to be connected to earth at each end of the cable so as in use of the cable, for example to serve as a continuous path throughout the length of the cable for surges developed in the cable by lightning strikes or switching operations thereby to prevent the appearance of corresponding high transient overvoltages on the outer cable sheath (1, 18) and particularly at discontinuities therein, the electrical resistance of said inner shield (3, 14) being high relative to said outer sheath (1, 18) and the insulation between the inner cable shield (3, 14) and outer cable sheath (1, 18) being sufficient to sustain said surges but such as to fail on internal cable faults.

7. A single-core electrical power cable as claimed in claim 6 characterised in that said inner shield (3, 14) comprises spaced apart wires (14) wound about the cable core insulation (12) with a relatively long lay.

8. A single-core electrical power cable as claimed in claim 7 characterised in that said wires (14) are sandwiched between layers of carbon impregnated paper (13, 15).

9. A single-core electrical power cable as claimed in claim 6 characterised in that said inner shield (3, 14) comprises a lapped metallic tape.

10. A single-core electrical power cable as claimed in any of claims 6 to 9 characterised in that a semi-conducting layer is provided adjoining the inner shields (3, 14) such that the cable tends to exhibit enhanced surge energy absorption with consequent reduction in surge voltage.

11. A single-core electrical power cable as claimed in claim 10 characterised in that said semiconducting layer includes a material having a non-linear resistivity characteristic.

12. A single-core electrical power cable as claimed in any of claims 6 to 11 characterised in that the resistance of the inner shield (3, 14) is of the order of 0.02 ohm/metre.

## Patentansprüche

1. Elektrische Starkstromkabel-Installation mit einem einadrigen elektrisch Starkstromkabel mit einem zentralen Leiter (4, 10) und einem davon elektrisch isolierten äußeren Mantel (1, 18) dadurch gekennzeichnet,

daß das Kabel mit einer inneren Abschirmung (3, 14) versehen ist, die zwischen dem zentralen Leiter (10) und dem äußeren Mantel (1, 18) isoliert angeordnet ist,

daß die innere Abschirmung (3, 14) sich kontinuierlich über die volle Kabellänge der Installation erstreckt und an jedem Ende mit Erde verbunden ist, um einen durchgehenden Pfad für auf dem Kabel auftretende Strom- oder Spannungsstöße, z.B. durch Blitzeinschläge oder Schaltvorgänge, zu haben und somit das Auftreten von entsprechend hohen Überspannungsstößen auf dem äußeren Kabelmantel (1, 18), insbesondere an irgendwelchen Stoßstellen, zur verhindern,

daß der elektrische Widerstand der inneren Abschirmung (3, 14) hoch gegenüber dem äußeren Mantel (1, 18) ist und daß die Isolierung zwischen der inneren Kabelabschirmung (3, 14) und dem äußeren Kabelmantel (1, 18) so bemessen ist, daß sie den Strom- oder Spannungsstößen widersteht, bei inneren Kabelfehlern jedoch zusammenbricht.

2. Starkstromkabel-Installation nach Anspruch 1, dadurch gekennzeichnet, daß die Kabellänge der Installation eine Mehrzahl von in Serie geschalteten Kabelabschnitten enthält, daß der äußere Kabelmantel (1, 18) jedes Kabelabschnittes von dem äußeren Kabelmantel (1, 18) der benachbarten Kabelabschnitte elektrisch isoliert und mit Erde verbunden ist und

daß die innere Kabelabschirmung (3, 14) jedes Kabelabschnittes mit den inneren Kabelabschirmungen (3, 14) der benachbarten Kabelabschnitte gekoppelt und an jedem Ende des entsprechenden kabelabschnittes mit Erde verbunden ist.

3. Starkstromkabel-Installation nach Anspruch 2, dadurch gekennzeichnet, daß ein durchgehender Erdleiter sich entlang dem kabel erstreckt und an den Erdungspunkten des Kabels geerdet ist.

4. Starkstromkabel-Installation mit drei sich gemeinsam erstreckenden Installationen nach Anspruch 1, eine Installation pro Phase, dadurch gekennzeichnet, daß an im Abstand voneinander leigenden Positionen der Kabellänge der äußere Mantel (1, 18) aller drei Kabel in Längsrichtung unterbrochen ist und eine Erdverbindung zu den inneren Abschirmungen (3, 14) aller drei Kabel besteht, wobei der äußere Mantel (1, 18) eines jeden sich zwischen solchen Positionen erstreckenden kabelabschnittes an einem oder mehreren Punkten geerdet ist.

5. Starkstromkabel-Installation mit drei sich gemeinsam erstreckendem Installationen nach Anspruch 1, eine Installation pro Phase, dadurch gekennzeichnet, daß die Kabellänge über die gesamte Installation hin in Abschnitte aufgeteilt ist, die je aus drei Längen der drei Kabel bestehen, wobei der äußere Kabelmantel (1, 18) dieser kabellängen an jedem Abschnittende in Längsrichtung unterbrochen ist; daß die Enden des äußeren Kabelmantels (1, 18) und die innere Kabelabschirmung (3, 14) am Ende der genannten Abschnitte geerdet sind und daß die Enden des äußeren Kabelmantels (1, 18) an den beiden zwischen den Abschnittenden angeordnet Positionen, bei gekreuzter Anordnung der entsprechenden Kabellängen, für jede Phase an solchen Zwischenpositionen leitend miteinander verbunden sind.

6. Einadriges Starkstromkabel zur Verwendung in einer Starkstromkabel-Installation nach einem der Ansprüche 1 bis 5, mit einem zentralen Leiter (4, 10) und einem äußeren Mantel (1, 18), der von dem Leiter (4, 10) elektrisch isoliert ist,

dadurch gekennzeichnet, daß eine Innenabschirmung (3, 14) vorgesehen ist, die, elektrisch isoliert, zwischen der zentralen leitenden Ader (10) und dem äußeren Mantel (1, 18) angeordnet ist, wobei die Innenabschirmung (3, 14) so ausgelegt ist, daß sie an jedem Kabelende geerdet ist, so daß sie beispielsweise bei sich im Kabel durch Blitzeinschlag oder Schaltvorgänge bildenden Strom- oder Spannungsstößen über die gesamte Kabellänge als durchgehender Pfad wirkt und auf diese Weise das Auftreten entsprechend hoher Überspannungsstöße am äußeren Kabelmantel (1, 18) und insbesondere an Stoßstellen darin verhindert,

und daß der elektrische Widerstand der Innenabschirmung (3, 14) gegenüber dem äußeren Mantel (1, 18) verhältnismäßig hoch ist und die Isolierung zwischen der Kabelinnenabschirmung (3, 14) und dem äußeren Kabelmantel (1, 18) so ausgelegt ist, daß sie den Strom- oder Spannungs stößen widersteht, aber bei inneren Kabelfehlern zusammenbricht.

7. Einadriges Starkstromkabel nach Anspruch 6, dadurch gekennzeichnet, daß die Innenabschirmung (3, 14) im Abstand voneinander angeordnete, um die Kabeladerisolierung mit verhältnismäßig langem Schlag gewundene Drähte (14) enthält.

8. Einadriges Starkstromkabel nach Anspruch 7, dadurch gekennzeichnet, daß die Drähte (14) zwischen Schichten von mit Kohlenstoff imprägniertem Papier (13, 15) als Verbund angeordnet sind.

9. Einadriges Starkstromkabel nach Anspruch 6, dadurch gekennzeichnet, daß die Innenabschirmung (3, 14) ein überlappend angeordnetes Metallband enthält.

10. Einadriges Starkstromkabel nach einem der Ansprüche 6 bis 9, dadurch gekennzeichnet, daß angrenzend an die Innenabschirmung (3, 14) eine Halbleiterschicht so vorgesehen ist, daß das Kabel tendenziell eine verbesserte Absorption von Strom- oder Spannungsstoßenergie bei daraus folgender Verringerung der Stoßspannung aufweist.

11. Einadriges Starkstromkabel nach Anspruch 10, dadurch gekennzeichnet, daß das Halbleiterschicht ein Material enthält, das durch einen nichtlinearen spezifischen Widerstand gekennzeichnet ist.

12. Einadriges Starkstromkabel nach einem der Ansprüche 6 bis 11, dadurch gekennzeichnet, daß der Widerstand der Innenabschirmung (3, 14) bei etwa 0,02 Ohm/Meter liegt.

**Revendications**

1. Une installation à câble électrique d'alimentation comprenant un câble électrique d'alimentation à un seul conducteur comportant un conducteur central (4, 10) et une gaine extérieure (1, 18) isolée électriquement du conducteur central (4, 10), caractérisée en ce que le câble comporte un blindage interne (3, 14) disposé entre et isolé du conducteur central (10) et de la gaine extérieure (1, 18), le blindage interne (3, 14) étant continu sur la longueur du brin de câble de l'installation et étant relié à la terre à chaque extrémité dudit brin afin de créer un trajet continu pour des surtensions engendrées dans le câble, par exemple par des coups de foudre ou par des opérations de commutation, et pour empêcher ainsi l'application de fortes tensions transitoires correspondantes à la gaine du câble (1, 18), en particulier dans des discontinuités de celle-ci, la résistance électrique dudit blindage (3, 14) étant élevée par rapport à ladite gaine extérieure (1, 18) et l'isolation entre le blindage de câble (3, 14) et la gaine de câble (3, 14) étant suffisante pour résister à de telles surtensions mais étant détruite lors de défauts internes du câble.

2. Une installation à câble électrique d'alimentation telle que revendiquée dans la revendication 1, caractérisée en ce que le brin de câble de l'installation comprend une pluralité de tronçons de câble reliés en série et dans laquelle la gaine extérieure de câble (1, 18) de chaque tronçon est électriquement isolée des gaines extérieures de câbles (1, 18) des tronçons adjacentes et est reliée à la terre, et le blindage interne de câble (3, 14) de chaque tronçon est couplé avec les blindages internes de câbles (3, 14) des tronçons adjacents et est relié à la terre à chaque extrémité du tronçon respectif.

3. Une installation à câble électrique d'alimentation conforme à la revendication 2, caractérisée en ce qu'un conducteur de continuité de mise à la terre s'étend le long du câble et est mis à la terre en des points de prise de terre du câble.

4. Une installation à câble électrique d'alimentation comprenant trois installations adjacentes telles que revendiquées dans la revendication 1, un pour chaque phase, caractérisée en ce que, en des positions espacées sur le brin de câble, les gaines extérieures (1, 18) des trois câbles sont longitudinalement discontinues et une prise de terre est établie avec les blindages internes (3, 14) des trois câbles, chaque tronçon de câble qui s'étend entre les positions précitées étant relié par sa gaine extérieure (1, 18) avec la terre en un ou plusieurs points.

5. Une installation à câble électrique d'alimentation comprenant trois installations adjacentes telles que revendiquées dans la revendication 1, une pour chaque phase, caractérisée en ce que, le brin de câble dans l'installation est divisé en tronçons composés chacun de trois longueurs de trois câbles, chacune desdites longueurs de câble comportant une gaine extérieure de câble (1, 18) qui est longitudinalement discontinue à chaque extrémité, les extrémités de gaines extérieures de câbles (1, 18) et les blindages internes de câbles (3, 14) étant reliées à la terre à chaque extrémité de chacun desdits tronçons, et les extrémités de gaines extérieures de câbles (1, 18) étant liées en croix dans les deux positions situées entre les extrémités de chaque tronçon, avec transposition des longueurs respectives de câbles pour chaque phase dans lesdites positions intermédiaires.

6. Un câble électrique d'alimentation à un seul conducteur utilisable dans une installation à câble électrique d'alimentation telle que revendiquée dans l'une quelconque des revendications précédentes et comprenant un conducteur central (4, 10) et une gaine extérieure (1, 18) électriquement isolée du conducteur central (4, 10), caractérisé par un blindage interne (3, 14) disposé entre et électriquement isolé du conducteur central (10), et de la gaine extérieure (1, 18), ledit blindage interne (3, 14) étant adapté et agencé pour être relié à la masse à chaque extrémité du câble de façon à servir, lors de l'utilisation du câble, par exemple le trajet continu s'étendant sur la longueur du câble pour des surtensions engendrées dans le câble par des coups de foudre ou des opérations de commutation en empêchant ainsi l'application de fortes surtensions transitoires correspondantes à la gaine extérieure de câble (1, 18) et en particulier dans des discontinuités de celle-ci, la résistance électrique dudit blindage interne (3, 14) étant relativement grande par rapport à la gaine extérieure (1, 18), et l'isolation entre le blindage interne de câble (3, 14) et la gaine extérieure de câble (1, 18) étant suffisante pour résister auxdites surtensions mais étant détruite lors de défauts internes du câble.

7. Un câble électrique d'alimentation à un seul conducteur tel que revendiqué dans la revendication 6, caractérisé en ce que ledit blindage interne (3, 14) comprend des fils espacés (14), enroulés autour de l'isolation d'âme (12) du câble avec un pas relativement long.

8. Un câble électrique d'alimentation à un seul conducteur tel que revendiqué dans la revendication 7, caractérisé en ce que lesdits fils (14) sont interposés entre des couches de papier imprégné de carbone (13, 15).

9. Un câble électrique d'alimentation à un seul conducteur tel que revendiqué dans la revendication 6, caractérisé en ce que ledit blindage interne (3, 14) comprend un ruban métallique en recouvrement.

10. Un câble électrique d'alimentation à un seul conducteur tel que revendiqué dans l'une quelconque des revendications 6 à 9, caractérisé en ce qu'il est prévu une couche semiconductrice adjacente au blindage interne (3, 14) de manière que le câble ait tendance à mieux absorber une énergie de surtensions avec pour conséquence une réduction des surtensions.

11. Un câble électrique d'alimentation à un seul conducteur tel que revendiqué dans la revendication 10, caractérisé en ce que ladite couche semiconductrice comprend une matière ayant une caractéristique de résistivité non linéaire.

12. Un câble électrique d'alimentation à un seul conducteur tel que revendiqué dans une quelconque des revendications 6 à 11, caractérisé en ce que la résistance du blindage interne (3, 14) est de l'ordre de 0,02 ohm/mètre.

0  071  435

# FIG.1.

# FIG.2.

## FIG.3.

## FIG.4.